# EUROPEAN PATENT APPLICATION

(11) **EP 0 541 494 A1**
(43) Date of publication of application: **12.05.1993**
(21) Application number: 92830596.0
(22) Date of filing: 30.10.1992
(51) Int. Cl.: B60B 17/00

(54) **Thermal protection device for damping systems of railway and underground railway vehicle wheels**

(30) Priority: 07.11.1991 IT MI912960
(71) Applicant: FIP INDUSTRIALE S.P.A., I-35050 Selvazzano Dentro (Padova) (IT)
(72) Inventor: Rouget De Gourcez, Etienne, I-35050 Selvazzano Dentro, (Padova) (IT)
(74) Representative: Cicogna, Franco

(57) **Abstract**

The present invention relates to a thermal protection device for damping systems of railway and underground railway vehicle wheels, which comprises a counter-plate (1) associated with a vehicle wheel (3) through the interposition of a visco-elastic layer (2). The main feature of the invention is that between the visco-elastic layer and wheel there is included a layer of a material having thermal insulating properties (4).

## Description

### BACKGROUND OF THE INVENTION

The present invention relates to a thermal protection device for damping systems of railway and underground railway vehicle wheels.

As is known, in order to reduce chirping of train, tram and like vehicle wheels, on bend rail portions, there have been already used damping systems which provide to coat a portion of the wheel with means added on the outer surface of said wheel.

Actually, such a system consists of applying, on the wheel to be damped, at its outer edge, a visco-elastic material layer, of suitable nature and thickness, delimited and held by a steel counter-plate.

In addition to possible safety systems, the system is held on the wheel by means of suitable glues, structural adhesives adapted to provide a firm connection and a proper operation.

However, the elastomeric visco-elastic material, as well as the organic nature adhesive which are at present used provide a limited resistance against temperature, and, accordingly, this prior system can not be used on wheels supporting the braking jaws, since the high temperature generated thereby would be susceptible to greatly damage both the visco-elastic layer and the structural adhesive.

Accordingly, since the temperature increase due to the energy dissipated in a braking operation is not compatible with the resistence of the organic materials used in such a system, this method can not be practically used.

In fact, by the above mentioned method it is possible to obtain a damping of the wheels, in order to eliminate noise or chirping, exclusively in the case in which the axle is provided with a braking device separated from the wheel and, accordingly, such as not to cause great increases of temperatures on said wheel.

### SUMMARY OF THE INVENTION

Accordingly, the aim of the present invention is to solve the above mentioned problem, by providing a thermal protection device which is compatible with the existing wheel damping systems and which allows to damp also wheels subjected to a great increase of temperature.

Within the scope of the above mentioned aim, a main object of the present invention is to provide such a thermal protection device which, while having improved operating properties, does not generate any complex or expensive constructional problems and is very safe and reliable in operation.

Another object of the present invention is to provide such a thermal protection device which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a thermal protection device for damping systems of railway and underground railway vehicle wheels, comprising a counter-plate associated with a wheel through the interposition of a visco-elastic layer, characterized in that said device further comprises, between said viscoelastic layer and wheel, a layer of a material having thermal insulating properties.

### BRIEF DESCRIPTION OF THE DRAWINGS

Further characteristics and advantages of the invention will become more apparent hereinafter from the following detailed disclosure of some preferred, though not exclusive, embodiments thereof, which are illustrated, by way of an indicative, but not limitative example, in the figures of the accompanying drawings, where:
Figure 1 is a schematic view illustrating the subject device applied to the outside of a wheel;
Figure 2 illustrates the subject device, applied to the outside of the wheel, in a suitable provided cavity of said wheel;
Figure 3 illustrates the subject device, applied inside the wheel, and including a substantially flat configuration counterplate;
Figure 4 illustrates the device applied inside the wheel at a central region thereof;
Figure 5 illustrates the subject device connected to the outside of the wheel, by means of a fixing ear;
Figure 6 illustrates the subject device connected to the inside of the wheel, by means of a fixing ear.

### DESCRIPTION OF THE PREFERRED EMBODIMENTS

With reference to the figures of the accompanying drawings, the thermal protection device for damping systems of railway and underground railway vehicle wheels comprises, generally, a counter-plate indicated at the reference number 1, which is advantageously made of a steel material, and has a thickness from 3 to 6 mm, the contour whereof follows that of the wheel, so as to have a configuration, in some cases, which is substantially flat or, in other cases, which is mainly an angular configuration.

The counter-plate 1 is connected to a viscoelastic material layer 2, having a thickness from 0.5 to 2.5 mm, characterized by a dynamic module from 10⁶ to 10⁹ N/m and a loss angle β from 0.3 to 1, in a frequency range from 500 to 5000 Hz and in a temperature range from 0° to about 60°C.

The visco-elastic material layer is made rigid with the counterplate, both by glueing and by curing the elastomeric material.

The counterplate 1 with its related viscoelastic material layer 2, is connected to the wheel 3 through the interposition of a thermal protective layer 4, which advantageously comprises a ceramics product obtained by molding, or it can also be constituted by any other suitable material adapted to operated as a barrier against temperature, such as for example asbestos and the like, and having a sufficient thickness (from about 2.5 to 3 mm), so as to provide a temperature less than 100°C at said visco-elastic material.

The thermal protection layer, preferably, will be glued on the visco-elastic material by means of an organic type of adhesive, and, on the opposite surface contacting the wheel, it will be connected by means of a glue or adhesive having a thermal resistance at least equal or corresponding to the selected protection.

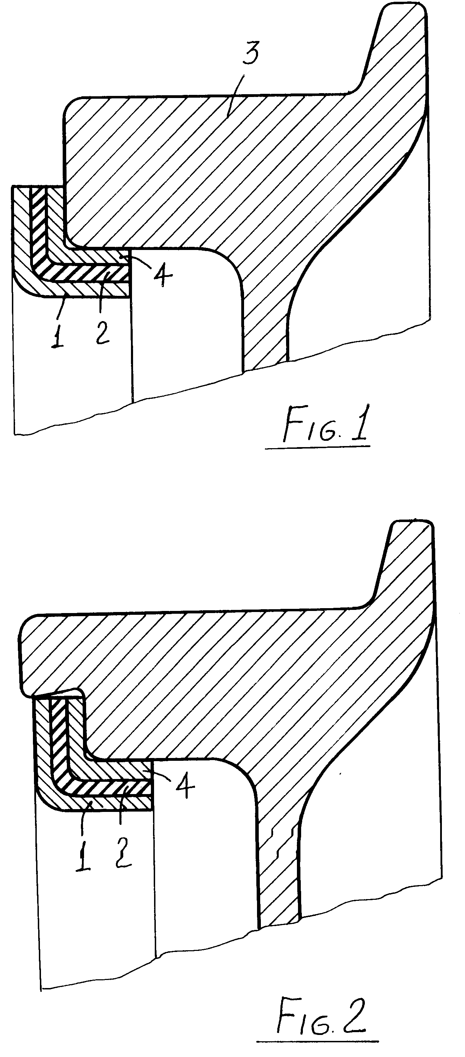

The device can be applied in several ways depending on requirements; thus, for example, as shown in figure 1, the protection device is applied on the outside of the wheel, and the counter-plate has a substantially angular configuration arid being applied on the axial extension of the wheel.

As shown in figure 2, on the outer surface of the wheel there is provided a cavity 10 for housing both the angular counter-plate and the viscoelastic layer-protection layer assembly.

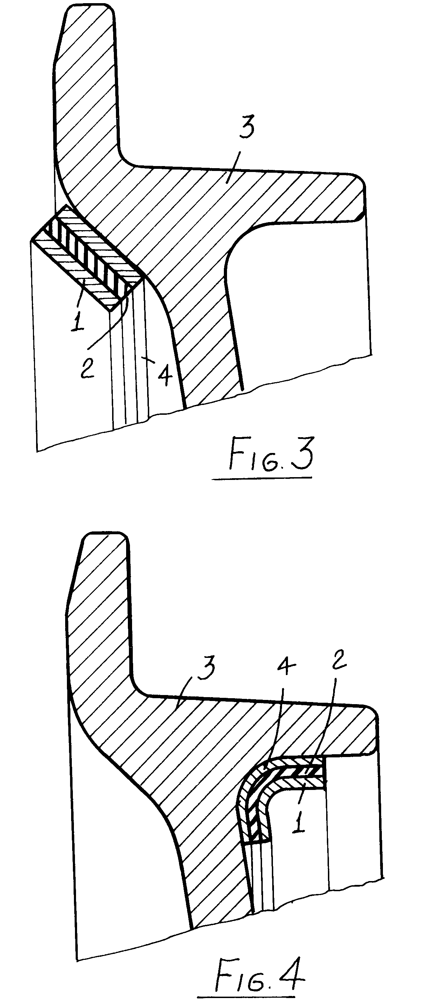

As shown in figure 3, the counter-plate has a flat configuration and is connected, on the inside surface of the wheel, near a comparatively central region.

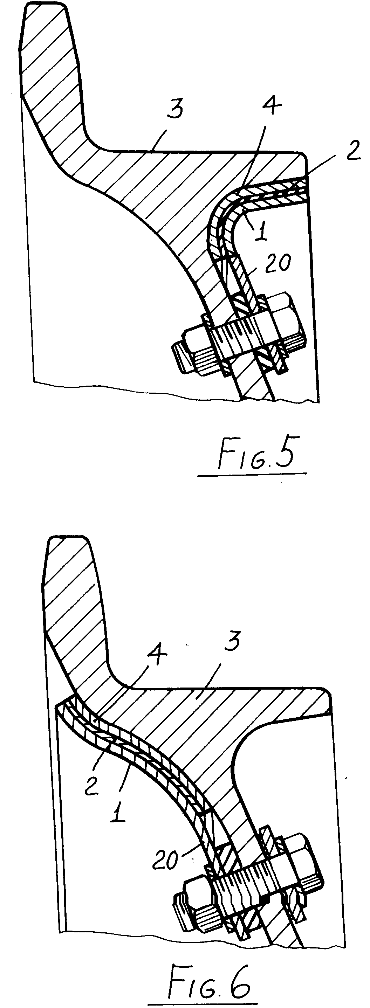

In figure 4, the counter-plate has an angular configuration and is applied on the outer surface of the wheel.

As shown in figures 5 and 6, the counter-plate is provided with fixing ears, indicated at 20, which operate as a further anchoring element, by means of a bolt and through the interposition of a conventional washer.

From the above disclosure it should be apparent that the invention fully achieves the intended aim and objects.

In particular it is to be pointed out that a thermal protection device has been provided which allows to obtain an optimum thermal insulation, so as to prevent the viscoelastic layer from being damaged, even in the case in which on the wheel there are generated great temperatures, since between the visco-elastic layer and the wheel there is actually interposed a thermal barrier consisting of the ceramics layer.

The invention as disclosed is susceptible to several modifications and variations all of which will come within the scope of the inventive idea.

Moreover, all of the details can be replaced by other technically equivalent elements.

In practicing the invention, the used material, as well as the contingent size and shape, can be any according to requirements.

## Claims

1. A thermal protection device for damping systems of railway and underground railway vehicle wheels, comprising a counter-plate associated with a wheel through the interposition of a visco-elastic layer, characterized in that said device further comprises, between said visco-elastic layer and wheel, a layer of a material having thermal insulating properties.

2. A device, according to Claim 1, characterized in that said thermal insulating material layer comprises a ceramics material layer.

3. A device, according to Claims 1 and 2, characterized in that said thermal insulating material layer is connected to said visco-elastic layer by means of an organic type of adhesive and to the wheel by means of a glue having a thermal resistance at least equal to the thermal resistance of the thermal insulating material layer.

4. A device, according to one or more of the preceding claims, characterized in that said counter-plate has a configuration fitting the application region thereof on said wheel.
